# FASCICULE DE BREVET EUROPEEN

(11) **EP 2 901 328 B1**
(45) Date de publication et mention de la délivrance du brevet: **03.04.2019**
(21) Numéro de dépôt: 13782758.0
(22) Date de dépôt: 24.09.2013
(51) Int. Cl.: G06F 17/30, H04L 29/06

(54) **PROCÉDÉ DE PRÉSENTATION À DISTANCE ENTRE AU MOINS DEUX TERMINAUX CONNECTÉS À TRAVERS UN RÉSEAU**
VERFAHREN ZUR ENTFERNTEN DARSTELLUNG ZWISCHEN MINDESTENS ZWEI ÜBER EIN NETZWERK VERBUNDENEN ENDGERÄTEN
METHOD FOR A REMOTE PRESENTATION BETWEEN AT LEAST TWO TERMINALS CONNECTED VIA A NETWORK

(30) Priorité: 25.09.2012 FR 1258967
(43) Date de publication de la demande: 05.08.2015
(73) Titulaire: CEGEDIM, 92100 Boulogne Billancourt (FR)
(72) Inventeur: CADOU, Olivier, F-75009 Paris (FR)
(74) Mandataire: Brevalex
(86) Numéro de dépôt international: PCT/FR2013/052247
(87) Numéro de publication internationale: WO 2014/049262

(56) Documents cités:
- EP-A1- 2 088 519
- US-A1- 2002 029 245
- US-A1- 2003 160 813
- US-A1- 2005 246 422

## Description

La présente invention concerne le domaine du partage de documents ou d'applications entre deux terminaux connectés à travers un réseau.

Par document, on entend tout type d'information, quelle que soit sa représentation, y compris graphique, associée à tout type de format de fichier informatique.

Par application, on entend un logiciel, quelle que soit sa version, exécutable nativement par le terminal sur lequel celle-ci est installée ou une application web exécutable par un serveur auquel le terminal est connecté (solution en mode SaaS : Software as a Service par anglicisme).

Par terminal, on entend tout type d'objet communiquant susceptible de communiquer avec un serveur, par exemple un téléphone intelligent, plus communément appelé « smartphone » par anglicisme, ou un ordinateur individuel, plus communément appelé *Personal Computer* ou PC par anglicisme, indifféremment de son système d'exploitation, que celui-ci soit développé par Microsoft (marque déposée), Apple (marque déposée) ou en logiciel libre, par exemple Linux (marque déposée). Le terminal peut se présenter sous forme fixe (avec unité centrale), portable ou comme tablette graphique tactile, par exemple un iPad (marque déposée).

Il existe plusieurs types de solutions de partage de documents ou d'applications, par exemple pour réaliser des présentations, éventuellement interactives, à distance entre deux terminaux connectées à travers un réseau, par exemple l'Internet.

Par convention, on entend par émetteur le terminal qui émet des documents à destination d'un ou plusieurs terminaux récepteurs, en l'espèce via un serveur web. L'émetteur peut par exemple être associé à un présentateur qui souhaite partager, présenter des documents ou des applications à des participants.

Le document de l'art antérieur US2003/0160813 décrit un système de présentation à distance fournissant une interface entre l'interface utilisateur graphique et un serveur hébergeant une application de présentation.

Un autre document de l'art antérieur EP2088519 décrit un procédé de conférence dans lequel le téléchargement d'une page Web sur un terminal déclenche l'envoi automatique de l'adresse de la page Web vers le second terminal et sa récupération indépendante.

Un autre document de la technique antérieure US2005/0246422 décrit une navigation interactive sur Internet permettant à plusieurs personnes de mener une session de navigation sur le Web, tout en étant suivie par plusieurs autres individus.

Un document différent de l'état de la technique US2002/0029245 décrit un système pour coordonner la navigation et la navigation combinée qui utilisent des modules d'extension pour enregistrer des événements de navigateur

Un premier type de partage de documents ou d'applications entre deux terminaux consiste à partager tout ou partie d'un écran d'affichage.

Dans ce cas, typiquement, une application installée sur un premier terminal, émetteur, capture tout ou partie (par exemple une fenêtre d'affichage) du contenu de son écran d'affichage et l'envoie sous forme d'un flux vidéo à un serveur qui retransmet ensuite ce flux à un deuxième terminal, récepteur, qui est équipé d'un lecteur approprié pour lire ce type de flux vidéo.

Dans ce cas, une même application doit être installée sur le terminal de chaque participant souhaitant partager tout ou partie de son écran d'affichage.

L'avantage de ce type de solution réside en ce qu'il s'affranchit des problèmes de format des informations ou documents échangés ou des applications utilisées. Le document ou l'application à partager n'ont pas besoin d'être existant sur les terminaux récepteurs, ils peuvent n'exister que sur le terminal émetteur. Quels que soient les documents ou applications utilisées par le présentateur, les participants peuvent les voir affichées sur leurs écrans quelle que soit leur configuration matérielle et logicielle.

Cependant, ce type de solution nécessite l'installation d'une application sur chaque terminal émetteur ou récepteur.

En outre, par l'utilisation de flux vidéo, ce type de solution nécessite une bande passante (montante et descendante) importante et des terminaux performants.

Un deuxième type de partage de documents ou d'applications entre deux terminaux consiste à prendre le contrôle à distance d'un terminal.

Dans ce cas, typiquement, comme précédemment, une application installée sur un premier terminal, émetteur, capture le contenu de tout ou partie de son écran d'affichage et envoie ce contenu sous forme de flux vidéo à un serveur qui retransmet ce flux vidéo ensuite à un deuxième terminal, récepteur, qui est équipé d'un lecteur approprié pour lire ce type de flux vidéo.

En outre, une application installée sur le deuxième terminal communique avec le premier terminal via un serveur afin de contrôler les périphériques (souris et clavier) du premier terminal.

Dans ce cas, par exemple, un présentateur associé au deuxième terminal peut prendre le contrôle du premier terminal, associé à un participant.

L'avantage de ce type de solution réside en ce qu'il s'affranchit également des problèmes de format de documents échangés et des applications utilisées. Quels que soient les documents ou applications utilisées par le présentateur, les participants peuvent les voir sur leurs écrans, quelle que soit leur configuration logicielle ou matérielle.

Cependant, ce type de solution nécessite l'installation d'une application sur chaque terminal.

En outre, ce type de solution nécessite une bande passante (montante et descendante) importante et des terminaux performants.

En outre, les documents ou applications présentées doivent être présentes sur le premier terminal (sur lequel le contrôle est pris).

Un troisième type de partage de documents entre deux terminaux consiste à présenter des documents par commande du rafraichissement d'affichage.

Dans ce cas, typiquement, les terminaux se connectent sur un serveur commun qui leur distribue les mêmes documents simultanément par l'intermédiaire d'un système de rafraichissement automatique présent sur la première page de connexion. Le choix des documents étant commandé par l'un des terminaux.

L'avantage de ce type de solution réside dans sa simplicité en ce qu'il ne nécessite pas l'installation d'application particulière sur l'ensemble des terminaux, typiquement un navigateur internet peut suffire.

Cependant, ce type de solution est tributaire de la configuration logicielle ou matérielle des terminaux des utilisateurs pour la lecture des documents envoyés.

En outre, ce type de solution nécessite généralement une bande passante (descendante depuis le serveur commun) importante.

En outre, ce type de solution ne permet pas de partager des applications entre terminaux.

En fait, ces trois types de solutions sont assez adaptés à des organisations dédiées, par exemple intra-entreprise, mais s'avèrent très contraignantes, voire impossible à mettre en oeuvre par exemple dans le cadre d'utilisateurs nomades ou de prestation de service, notamment du fait :
- qu'il est, dans bon nombre de situations, impossible d'installer la moindre application sur les terminaux des participants/récepteurs (alors qu'une installation est souvent possible côté présentateur/émetteur);
- qu'il est très souvent impossible de préparer de multiples versions des documents à présenter pour s'adapter aux différentes configurations logicielles ou matérielles possibles des participants; et
- que le présentateur ou les participants disposent parfois d'une très mauvaise bande passante.

La présente invention vise à s'affranchir de l'une au moins de ces difficultés et propose un nouveau type de solution.

Selon un premier de ses objets, l'invention concerne un procédé de présentation à distance entre un premier terminal (100) et au moins un deuxième terminal (200, 200') connectés à travers un réseau, comprenant des étapes consistant à :
- générer (20) des événements lors d'une action d'un utilisateur sur un des périphériques du premier terminal, et envoyer lesdits événements générés à un contrôleur machine (110) du premier terminal.

Il est essentiellement caractérisé en ce qu'il comprend en outre des étapes consistant à :
- envoyer (30) à un serveur web (300) lesdits événements générés ; et
- envoyer (40) lesdits événements depuis ledit serveur web (300) à au moins un contrôleur machine parmi le contrôleur machine (210) dudit deuxième terminal (200) et le contrôleur machine (410) d'un serveur vidéo (400) dont la configuration est compatible avec celle du premier terminal (100).

Dans un mode de réalisation, on prévoit en outre des étapes consistant à :
- comparer (70) la configuration du premier terminal (100) et celle du deuxième terminal (210, 210') ; et
   en fonction du résultat de la comparaison,
- si les configurations sont similaires, traduire (80) lesdits événements avant leur envoi à un contrôleur machine du deuxième terminal;
- si les configurations ne sont pas compatibles,
   o émettre (88) un message d'erreur ou un message d'alerte.
On peut prévoir, si les configurations sont identiques ou similaires, d'envoyer les événements à un contrôleur machine du deuxième terminal, éventuellement sans traduction. L'envoi desdits événements est de préférence fait via un serveur web.

Dans un mode de réalisation, on prévoit en outre, sur le serveur vidéo (400), des étapes consistant à :
- générer et enregistrer (50) un flux vidéo reproduisant les actions d'un utilisateur sur un des périphériques du premier terminal par les événements générés (20) et envoyés (30, 40).
On peut prévoir,
- si les configurations ne sont pas compatibles,
   o d'émettre (88) un message d'erreur ou un message d'alerte ; et
- si les configurations sont similaires, traduire (80) lesdits événements avant leur envoi à un contrôleur machine du serveur vidéo;
- générer sur le serveur vidéo et enregistrer sur ce même serveur (50) un flux vidéo à partir des événements joués par le contrôleur machine du serveur vidéo, reproduisant les actions d'un utilisateur sur un des périphériques du premier terminal par les événements générés (20) et reçus du serveur web (30, 40).

Dans un mode de réalisation, on prévoit en outre une étape consistant à diffuser (60) ledit flux vidéo audit deuxième terminal (200, 210').

Dans un mode de réalisation, on prévoit en outre une étape consistant à :
- synchroniser (10) le premier terminal et le deuxième terminal par l'ouverture dans leur navigateur respectif d'une même page web (URL) ou l'ouverture d'une même application.

Grâce à cette caractéristique, le premier terminal et le deuxième terminal se trouvent dans une situation initiale similaire avant le démarrage du partage à distance.

Dans un mode de réalisation, on prévoit qu'au moins l'un des premier et deuxième terminal comprend un navigateur configuré pour lire le format de données HTML5.

Dans un mode de réalisation, on prévoit en outre sur l'un au moins desdits premier terminal et deuxième terminal, au moins l'une des étapes consistant à :
- télécharger (90) un document en temps réel,
- télécharger (91) un document préalablement à l'étape d'envoi lesdits événements depuis ledit serveur à au moins un contrôleur machine parmi le contrôleur machine dudit deuxième terminal et le contrôleur machine d'un serveur vidéo, et
- télécharger (92) un document par diffusion en mode continu.

Dans un mode de réalisation, on prévoit que l'étape de traduction (80) comprend pour un terminal donné au moins une des étapes consistant à :
- transformer (81) les coordonnées d'un pointeur en coordonnées relatives à la dimension de l'écran associé audit terminal; et
- établir (82) une correspondance bijective entre les actions d'un utilisateur sur écran tactile et les actions similaires sur écran non tactile.

Dans un mode de réalisation, on prévoit en outre des étapes consistant à :
- envoyer (31) audit serveur web l'identité de l'application lancée par l'action d'un utilisateur sur le premier terminal ou un de ses périphériques;
- envoyer (32) l'identité de ladite application depuis ledit serveur web à au moins un contrôleur machine dudit deuxième terminal; et
- forcer (33) l'exécution de ladite application sur ledit deuxième terminal.

Selon un autre de ses objets, l'invention concerne un programme d'ordinateur, comprenant des instructions de code de programme pour l'exécution des étapes du procédé selon l'invention, lorsque ledit programme est exécuté sur un ordinateur.

L'invention peut être appliquée notamment au travail collaboratif sur un contenu web ou à l'intérieur d'une application partagée entre utilisateurs équipés de tablettes graphiques telles que iPad (marque déposée), dans le cadre par exemple de formation à distance, y compris pour des classes virtuelles.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation du procédé selon l'invention,
- la figure 2 illustre un mode de réalisation d'un système susceptible de mettre en oeuvre le procédé selon l'invention, et

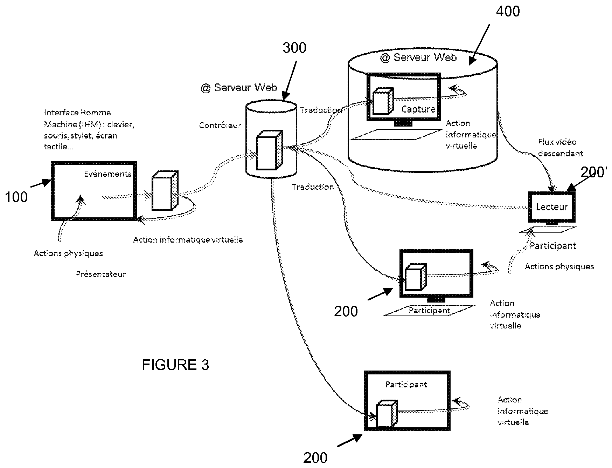

- la figure 3 illustre un mode de réalisation d'un système susceptible de mettre en oeuvre le procédé selon l'invention.

Tout terminal 100, 200, 200' comprend un ou en général plusieurs périphériques 120, 130, 220, 230, 220', 230', connectés au système informatique dudit terminal.

Il peut s'agir de périphérique d'entrée, par exemple un clavier ou un dispositif de pointage tel qu'une souris ou une tablette graphique avec stylet ; de périphérique de sortie tel qu'un écran de visualisation ; ou de périphérique d'entrée/sortie tel qu'un écran tactile.

Chaque périphérique est en général relié à un contrôleur individuel respectif. De sorte que chaque terminal comprend généralement au moins deux contrôleurs distincts : un contrôleur machine et un contrôleur périphérique (commun à l'ensemble des périphériques ou un contrôleur par périphérique).

Lorsqu'un utilisateur exerce une ou plusieurs actions physiques (séquentielles ou simultanées) sur un des périphériques d'un terminal, le contrôleur du périphérique utilisé envoie à un contrôleur du terminal, dit contrôleur machine, un ensemble correspondant d'instructions appelées événements. A réception de ces événements, le contrôleur machine les transforme en actions informatiques, c'est-à-dire en commandes machine, éventuellement à destination d'un autre périphérique.

Par exemple, sans qu'une application particulière soit nécessairement lancée, une action physique consistant à faire un clic (droit ou gauche) sur un lien hypertexte, sur un bouton, sur une icône..., à déplacer un ou deux pointeurs (par exemple une souris, ou un ou deux doigts sur un écran tactile), etc. entraîne la génération 20 d'événements correspondants dont il résulte par le contrôleur machine une commande associée (action informatique) : l'ouverture d'une nouvelle page (web ou autre) à l'écran, le lancement d'une application c'est-à-dire l'exécution d'un logiciel, effectuer un zoom, une rotation, etc.

Les événements envoyés au contrôleur machine comprennent par exemple des indications sur la position du ou des pointeurs, son/leur mouvement éventuel (distance et vitesse de déplacement ou d'écartement), ainsi que l'action éventuelle (clic, double clic, touché, glissé, etc.).

Le contrôleur machine 110, 210, 210' transforme ces indications en instructions, typiquement à destination d'un contrôleur d'un autre périphérique, voire du même.

Par commodité de langage, on entend par événement indistinctement les indications envoyées au contrôleur machine depuis un contrôleur de périphérique ou les instructions envoyées depuis le contrôleur machine vers un contrôleur de périphérique.

Lorsqu'une application particulière est lancée, il est classique que chaque application utilise un contrôleur d'application propre, qui permet selon le même principe d'exécuter un certain nombre de fonctions spécifiques, dépendant de l'action physique d'un utilisateur dans cette application.

Par exemple, dans une application permettant la saisie de texte, lorsqu'un utilisateur appuie sur la lettre « A » de son clavier, le contrôleur machine reçoit depuis le contrôleur du clavier ou de l'écran tactile un événement signifiant que cette lettre A est sélectionnée, et émet à destination du contrôleur de l'écran (tactile ou non) un ordre d'affichage de ce caractère A.

Il est proposé ici une utilisation astucieuse des événements et au moins un contrôleur machine d'au moins un des deux terminaux en réseau, dans laquelle dans un mode de réalisation, le contrôleur machine d'un des deux terminaux est piloté par les événements générés par l'autre des deux terminaux.

Dans un autre mode de réalisation, alternatif ou combinatoire, le contrôleur machine du terminal émetteur de l'un des deux terminaux émet des événements vers un serveur vidéo qui transforme ces instructions en flux vidéo à destination de l'autre des deux terminaux ou à destination de plusieurs autres terminaux (récepteurs) . Le contrôleur machine du deuxième terminal (récepteur) peut, en retour, même en réception d'un flux vidéo, émettre des événements pour contrôler le premier terminal (émetteur).

Grâce à l'invention, il est possible de piloter le contrôleur d'application de l'un des deux terminaux directement par l'autre des deux terminaux via un serveur web.

Différents modes de réalisation sont décrits plus après.

On prévoit un procédé de présentation à distance entre un premier terminal 100 et au moins un deuxième terminal 200, 200' connectés à travers un réseau, typiquement l'Internet.

Chaque terminal peut agir en mode d'émission (envoi des événements vers un serveur web 300) ou en mode de réception (réception des événements en provenance du serveur web).

On prévoit une étape 30 consistant à envoyer à un serveur web 300 (typiquement à son contrôleur machine 310) les événements générés par une action d'un utilisateur sur le premier terminal ou un de ses périphériques.

Grâce à cette caractéristique, la bande passante entre le premier terminal et le serveur web peut être très limitée en comparaison notamment de l'envoi du contenu sous forme de flux vidéo. En effet, chaque événement envoyé ne représente typiquement de quelques dizaines d'octets. L'étape d'envoi 30 peut donc être très rapide.

De préférence, l'envoi est effectué par l'intermédiaire d'une application spécifique lancée par un utilisateur dudit premier terminal.

Une fois les événements reçus par le serveur web 300, on prévoit une étape 40 consistant à envoyer lesdits événements depuis ledit serveur web à au moins un contrôleur machine 210 dudit deuxième terminal 200. On peut prévoir en complément ou en remplacement que l'étape 40 consiste à envoyer lesdits événements depuis ledit serveur web 300 à au moins un contrôleur machine 410 d'un serveur vidéo 400.

Le contrôleur machine 210 dudit deuxième terminal 200 reçoit les événements en provenance du serveur web 300 auquel il est connecté de préférence par l'intermédiaire d'une application spécifique lancée par un utilisateur dudit deuxième terminal. Le contrôleur machine 210 interprète alors les événements comme si ils provenaient dudit utilisateur dudit deuxième terminal utilisant son interface et les transforme en action informatique, ce qui reproduit sur le deuxième terminal 200 les actions de l'utilisateur du premier terminal 100.

De même que précédemment, comme seuls des événements sont transmis, la bande passante entre le serveur web 300 et le deuxième terminal 210 ou le serveur vidéo 400 peut être très faible.

Cette configuration est particulièrement adaptée aux cas où le premier terminal et le deuxième terminal ont des configurations identiques ou similaires, c'est-à-dire des configurations compatibles. Toute action effectuée sur l'un des terminaux est reproduite à l'identique sur l'autre terminal.

Par « configuration », on entend au moins l'un des éléments parmi le système d'exploitation, la taille de l'écran, la résolution de l'écran, et la version du logiciel ou du navigateur.

Par « configuration similaire », on entend notamment que le premier et le deuxième terminal comprennent chacun une version respective d'un même logiciel mais que ces deux versions sont compatibles entre elles, c'est-à-dire qu'une action relative à ce logiciel sur l'un des terminaux entraîne la même action relative à ce logiciel sur l'autre terminal.

Comme tous les terminaux n'ont pas nécessairement de configurations identiques ou similaires, on peut prévoir une étape 70 consistant à comparer la configuration du premier terminal et celle du deuxième terminal.

Typiquement, ce qui revient à identifier par exemple si les terminaux connectés au réseau sont des écrans tactiles ou non, la dimension de leur écran, leurs versions logicielles, etc.

Ainsi, en fonction du résultat de la comparaison :
- si les configurations sont identiques on envoie lesdits événements à un contrôleur machine du deuxième terminal;
- si les configurations sont similaires, on peut prévoir de traduire 80 lesdits événements avant leur envoi à un contrôleur machine du deuxième terminal; et
- si les configurations ne sont pas compatibles, on peut prévoir d'émettre un message d'erreur ou un message d'alerte, invitant par exemple à mettre en oeuvre la solution avec le serveur vidéo décrite ultérieurement.

L'étape de traduction 80 est mise en oeuvre de préférence par le serveur web 300 équipé de moyens de traduction 340, comprenant typiquement une mémoire et un calculateur. A titre alternatif, l'étape de traduction 80 peut être délocalisée, les moyens de traduction 340 étant compris par une autre machine, serveur ou terminal. L'étape de traduction 80 comprend pour un terminal donné au moins une des étapes consistant à :
transformer 81 les coordonnées absolues d'un pointeur en coordonnées relatives à la dimension de l'écran associé audit terminal; et
établir 82 une correspondance bijective entre les actions d'un utilisateur sur écran tactile et les actions similaires sur écran non tactile.

Par exemple, lorsqu'un utilisateur pointe à l'aide d'un pointeur (souris, stylet, doigt), les coordonnées absolues (X pixel, Y pixel de l'écran) du point pointé sont transformées en coordonnées relatives (Xr%, Yr% de la dimension l'écran).

Ces coordonnées relatives sont envoyées à l'autre terminal dont le contrôleur machine peut alors commander l'exécution de sorte que le même pourcentage soit appliqué, ce qui est particulièrement avantageux lorsque le premier et le deuxième terminal ont des dimensions d'écran respectives différentes.

Par exemple, en prenant comme origine le coin haut à gauche de l'écran, si l'utilisateur du premier terminal clique sur l'icône située par exemple à 10% de la largeur de l'écran et à 20% de la hauteur de l'écran par rapport à l'origine ; un clic ou équivalent (voir ci-dessous) est effectué sur le deuxième terminal avec le même pourcentage par rapport à la dimension de l'écran du deuxième terminal. Ainsi, si les deux icônes situées à ces endroits respectifs correspondent à la même application, cette application lancée sur le premier terminal est également lancée sur le deuxième terminal.

De manière similaire, on peut établir une correspondance, de préférence bijective, par exemple sous forme de table de correspondance enregistrée sur le serveur web, entre les actions d'un utilisateur sur un écran tactile et les actions correspondantes sur écran non tactile. Par exemple, sur un terminal à écran tactile, la réception d'un événement correspondant à un toucher d'un doigt, à une modification de la distance entre deux doigts, à un glissé de doigt etc. génère sur un terminal à écran non tactile, un événement correspondant respectivement à un clic, un zoom dont la proportion dépend de l'écartement entre les deux doigts, et un passage à une page suivante/précédente en fonction du sens de déplacement du glissé de doigt, etc.

Dans certains cas, les événements envoyés au serveur web comprennent également l'identité 31 de l'application lancée (exécutée) par l'action d'un utilisateur sur le premier terminal ou un de ses périphériques. L'identité de ladite application est ensuite envoyée 32 depuis le serveur web à au moins un contrôleur machine dudit deuxième terminal, ce qui permet l'exécution, éventuellement forcée 33, de ladite application sur ledit deuxième terminal.

Par ailleurs, on peut prévoir de synchroniser 10 au préalable le premier terminal et le deuxième terminal. A cet effet, on prévoit de préférence de les synchroniser par l'ouverture dans leur navigateur respectif d'une même page web (URL). Par navigateur, on entend un navigateur Internet web ou réseau social (Facebook - marque déposée - par exemple).

Une telle configuration est avantageuse dans les présentations web. En particulier, on peut prévoir qu'au moins l'un des premier et deuxième terminal comprend un navigateur configuré pour lire le format de données HTML5.

Dans ce cas, l'étape de traduction est facultative. Elle n'est nécessaire que depuis/vers un terminal qui comprend un navigateur configuré pour lire le format de données antérieur à HTML5, en l'espère HTML4.

### Exemples de fonctionnement.

Dans les cas où les configurations du premier et du deuxième terminal sont identiques, les actions d'un utilisateur du premier terminal sont reproduites à l'identique sur le deuxième terminal.

Dans les cas où les configurations du premier et du deuxième terminal sont compatibles, le serveur web traduit les actions d'un utilisateur du premier terminal pour qu'elles soient reproduites à l'identique sur le deuxième terminal.

Par exemple, un utilisateur du premier terminal, en l'espèce un iPad (marque déposée), souhaite partager un document avec un utilisateur d'un deuxième terminal, en l'espèce un PC avec souris. A leur connexion au serveur web, celui-ci calcule leur configuration et considère qu'elles sont compatibles. Par exemple, le premier utilisateur est un présentateur qui utilise sur son iPad une application qui encapsule un navigateur web (typiquement Webkit). Il veut partager un document HTML5 à distance avec un deuxième utilisateur, utilisant un PC.

Le deuxième utilisateur se connecte avec son navigateur web (par exemple Chrome) sur un site dont l'adresse URL lui est communiquée par le présentateur.

Le navigateur du deuxième utilisateur envoie au serveur web les informations concernant sa configuration (via les agents) et notamment l'identité du navigateur utilisé (en l'espèce Chrome, un navigateur qui sait interpréter les événements HTML5) et la résolution de son écran.

Dès lors, le présentateur peut partager un document HTML5, tout événement sur son terminal est traduit et reproduit sur le deuxième terminal.

Par exemple, un glissé de doigt sur l'écran tactile du premier terminal est transformé, grâce à la table de correspondance en événement de bougé de la souris sur le deuxième terminal. De même, le touché de doigt sur l'écran tactile du premier terminal est transformé, grâce à la table de correspondance en événement de clic sur le deuxième terminal.

On peut prévoir de synchroniser les deux terminaux sur une même application, par exemple un navigateur, ce qui est avantageux par exemple dans le cas où la disposition des icones n'est pas la même sur les deux terminaux. Les navigateurs peuvent être différents, ils n'ont pas besoin d'être identiques. Les navigateurs comprennent le même langage. Par exemple, les dernières versions de Chrome, Safari, Opera, Firefox et Internet Explorer comprennent le HTML5 et son Javascript.

Le dialogue entre le contrôleur machine et le contrôleur d'application du premier terminal est alors traduit en dialogue entre le contrôleur machine et le contrôleur d'application du deuxième terminal, ce qui garantit que les actions de l'utilisateur du premier terminal sont reproduites sur le deuxième terminal.

Dans les cas où les configurations du premier et du deuxième terminal ne sont pas compatibles, on peut prévoir un serveur vidéo, en outre du deuxième terminal.

Le serveur vidéo est équipé d'une configuration compatible avec le premier terminal et équipé d'un logiciel de capture vidéo permettant par des moyens vidéo 450 de générer et d'enregistrer 50 un flux vidéo reproduisant les actions d'un utilisateur sur un des périphériques du premier terminal, grâce aux événements générés et envoyés. Ce flux vidéo peut alors être diffusé 60 vers un deuxième terminal 200, 200', en particulier un deuxième terminal 210' dont la configuration n'est pas compatible avec celle du premier terminal.

Le serveur vidéo 400 peut fonctionner au sens du deuxième terminal tel que précédemment décrit ou émuler son fonctionnement.

On prévoit d'enregistrer un flux vidéo des actions correspondantes aux événements générés par les actions d'un utilisateur sur le premier terminal ou un de ses périphériques.

A cet effet, les événements envoyés par le premier terminal au serveur vidéo (contrôleur machine) génèrent l'exécution d'ordres par celui-ci reproduisant les actions de l'utilisateur du premier terminal, ces ordres sont capturés sous forme de flux vidéo transmis au deuxième terminal.

Cette configuration présente l'avantage de ne requérir qu'une très faible bande passante montante entre le premier terminal et le serveur vidéo ; et d'une configuration logicielle/matérielle quelconque du deuxième terminal. On peut donc s'affranchir des problèmes de format de documents échangés. Quels que soient les documents ou logiciels utilisés par exemple par un présentateur sur un terminal, des participants sur d'autres terminaux peuvent voir ceux-ci sur leurs écrans, quelle que soit leur configuration.

Pour la présentation d'un même document entre deux terminaux, on peut prévoir en outre sur l'un au moins desdits premier terminal et deuxième terminal, au moins l'une des étapes consistant à :
- télécharger 90 un document en temps réel,
- télécharger 91 un document préalablement à l'étape d'envoi lesdits événements depuis ledit serveur à au moins un contrôleur machine parmi le contrôleur machine dudit deuxième terminal et le contrôleur machine d'un serveur vidéo, et
- télécharger 92 un document par diffusion en mode continu.

En particulier, on peut prévoir que la diffusion en mode continu soit effectuée dans la mémoire cache du terminal récepteur.

Le téléchargement préalable est avantageux par exemple dans une configuration nomade.

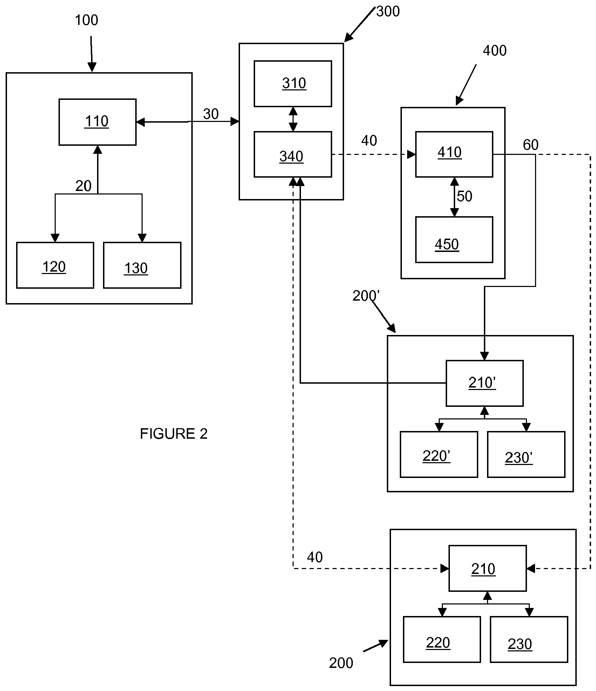

La présente invention n'est pas limitée aux modes de réalisation précédemment décrits. Par exemple, on peut combiner les modes de réalisation précédemment décrits techniquement compatibles, dont un mode de réalisation est illustré figure 2.

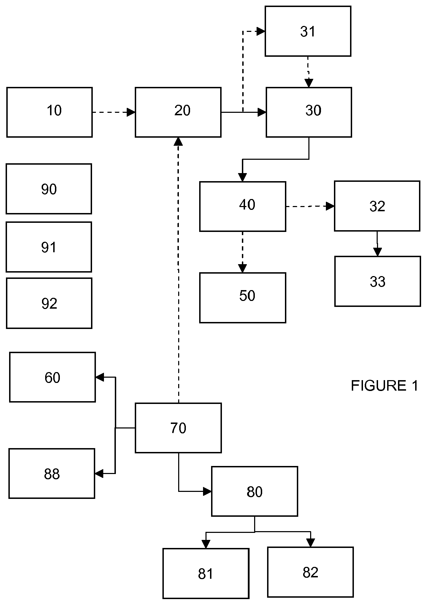

Sur la figure 2, le sens des flèches ont trait au sens de communication possible, les étapes du procédé sont représentées par leur référence numérique, et les pointillés, comme pour la figure 1, sont synonymes de caractère optionnel.

La notion de premier et deuxième terminal est relative : chaque terminal peut être considéré comme premier ou deuxième en fonction du contexte d'utilisation, et de préférence chaque terminal peut être capable d'émettre et de recevoir des événements.

Par exemple, dans le cas où un participant sur un deuxième terminal ne dispose pas d'une configuration initialement compatible avec celle d'un présentateur sur un premier terminal, le deuxième terminal reçoit un flux vidéo du serveur vidéo, sur lequel le participant peut interagir en renvoyant des événements qui sont éventuellement traduits par le serveur web et envoyés vers le premier terminal, et d'éventuels autres participants.

A l'évidence, l'invention ne se limite pas à deux terminaux mais peut comprendre une pluralité de terminaux reliés en réseau. En particulier, lorsque les terminaux récepteurs sont compatibles avec le terminal émetteur et qu'un serveur vidéo n'est pas nécessaire, puisque seuls des événements sont échangés via le serveur web, la bande passante requise est très faible et il est possible de connecter plusieurs centaines à plusieurs milliers de terminaux, ce qui est particulièrement avantageux pour la formation en ligne.

## Revendications

1. Procédé de présentation à distance entre un premier terminal (100) et au moins un deuxième terminal (200, 200') connectés à travers un réseau,
comprenant des étapes consistant à :
- générer (20) des événements lors d'une action d'un utilisateur sur un des périphériques du premier terminal, et envoyer lesdits événements générés à un contrôleur machine (110) du premier terminal ;
- envoyer (30) à un serveur web (300) lesdits événements générés ; et
- envoyer (40) lesdits événements depuis ledit serveur web (300) à au moins un contrôleur machine parmi le contrôleur machine (210) dudit deuxième terminal (200) et le contrôleur machine (410) d'un serveur vidéo (400) dont la configuration est compatible avec celle du premier terminal (100), **caractérisé en ce qu'**il comprend en outre des étapes consistant à :
- envoyer (31) audit serveur web l'identité de l'application lancée par l'action d'un utilisateur sur le premier terminal ou un de ses périphériques;
- envoyer (32) l'identité de ladite application depuis ledit serveur web à au moins un contrôleur machine dudit deuxième terminal; et
- forcer (33) l'exécution de ladite application sur ledit deuxième terminal pour servir d'intermédiaire aux événements en provenance du serveur web (300).

2. Procédé selon la revendication 1, comprenant en outre des étapes consistant à:
- comparer (70) la configuration du premier terminal (100) et celle du deuxième terminal (210, 210') ; et
en fonction du résultat de la comparaison,
- si les configurations sont similaires, traduire (80) lesdits événements avant leur envoi à un contrôleur machine du deuxième terminal;
- si les configurations ne sont pas compatibles, émettre (88) un message d'erreur ou un message d'alerte.

3. Procédé selon selon la revendication 2, comprenant en outre, sur le serveur vidéo (400), des étapes consistant à :
- générer et enregistrer (50) un flux vidéo reproduisant les actions d'un utilisateur sur un des périphériques du premier terminal par les événements générés (20) et envoyés (30, 40).

4. Procédé selon la revendication 3, comprenant en outre une étape consistant à diffuser (60) ledit flux vidéo audit deuxième terminal (200, 210').

5. Procédé selon l'une quelconque des revendications précédentes, comprenant en outre une étape consistant à :
- synchroniser (10) le premier terminal et le deuxième terminal par l'ouverture dans leur navigateur respectif d'une même page web (URL) ou l'ouverture de l'application.

6. Procédé selon la revendication 5, dans lequel au moins l'un des premier et deuxième terminal comprend un navigateur configuré pour lire le format de données HTML5.

7. Procédé selon l'une quelconque des revendications précédentes, comprenant en outre sur l'un au moins desdits premier terminal et deuxième terminal, au moins l'une des étapes consistant à :
- télécharger (90) un document en temps réel,
- télécharger (91) un document préalablement à l'étape d'envoi lesdits événements depuis ledit serveur à au moins un contrôleur machine parmi le contrôleur machine dudit deuxième terminal et le contrôleur machine d'un serveur vidéo, et
- télécharger (92) un document par diffusion en mode continu.

8. Procédé selon l'une quelconque des revendications précédentes, dans lequel l'étape de traduction (80) comprend pour un terminal donné au moins une des étapes consistant à :
- transformer (81) les coordonnées d'un pointeur en coordonnées relatives à la dimension de l'écran associé audit terminal; et
- établir (82) une correspondance bijective entre les actions d'un utilisateur sur écran tactile et les actions similaires sur écran non tactile.

9. Programme d'ordinateur, comprenant des instructions de code de programme pour l'exécution des étapes du procédé selon l'une quelconque des revendications précédentes, lorsque ledit programme est exécuté sur un ordinateur.

## Patentansprüche

1. Verfahren zur Darstellung über eine Entfernung zwischen einem ersten Endgerät (100) und zumindest einem zweiten Endgerät (200, 200'), die über ein Netzwerk verbunden sind,
umfassend die nachstehenden Schritte:
- Generieren (20) von Ereignissen während einer Aktion eines Benutzers an einem der Peripheriegeräte des ersten Endgeräts und Senden der generierten Ereignisse an eine Maschinensteuerung (110) des ersten Endgeräts;
- Senden (30) der generierten Ereignisse an einen Webserver (300); und
- Senden (40) der Ereignisse von dem Webserver (300) an zumindest eine Maschinensteuerung aus der Maschinensteuerung (210) des zweiten Endgeräts (200) und der Maschinensteuerung (410) eines Videoservers (400), dessen Konfiguration mit der des ersten Endgeräts (100) kompatibel ist,
**dadurch gekennzeichnet, dass** es ferner folgende Schritte umfasst:
- Senden (31) der Identität der Anwendung, die durch die Aktion eines Benutzers am ersten Endgerät oder an einem seiner Peripheriegeräte gestartet wird, an den Webserver;
- Senden (32) der Identität der Anwendung von dem Webserver an zumindest eine Maschinensteuerung des zweiten Endgeräts; und
- Erzwingen (33) der Ausführung der Anwendung auf dem zweiten Endgerät, um als Vermittler für die vom Webserver (300) stammenden Ereignisse zu fungieren.

2. Verfahren nach Anspruch 1, ferner umfassend die nachstehenden Schritte:
- Vergleichen (70) der Konfiguration des ersten Endgeräts (100) mit der des zweiten Endgeräts (210, 210'); und
je nach Ergebnis des Vergleichs
- bei ähnlichen Konfigurationen Übersetzen (80) der Ergebnisse vor deren Versenden an eine Maschinensteuerung des zweiten Endgeräts;
- bei nicht kompatiblen Konfigurationen Ausgeben (88) einer Fehlermeldung oder einer Warnmeldung.

3. Verfahren nach Anspruch 2, ferner umfassend die nachstehenden Schritte am Videoserver (400):
- Generieren und Aufzeichnen (50) eines Videostreams, der die Aktionen eines Benutzers an einem der Peripheriegeräte des ersten Endgeräts durch die generierten und gesendeten Ereignisse (30, 40) wiedergibt.

4. Verfahren nach Anspruch 3, ferner umfassend einen Schritt des Übertragens (60) des Videostreams an das zweite Endgerät (200, 210').

5. Verfahren nach einem der vorangehenden Ansprüche, ferner umfassend einen Schritt, der darin besteht,
- das erste Endgerät und das zweite Endgerät durch Öffnen einer gleichen Webseite (URL) in ihrem jeweiligen Browser oder durch Öffnen der Anwendung zu synchronisieren (10).

6. Verfahren nach Anspruch 5, wobei zumindest eines aus erstem und zweitem Endgerät einen Browser enthält, der zum Lesen des HTML5-Datenformats konfiguriert ist.

7. Verfahren nach einem der vorangehenden Ansprüche, ferner umfassend an zumindest einem aus erstem und zweitem Endgerät zumindest einen der nachstehenden Schritte:
- Herunterladen (90) eines Dokuments in Echtzeit,
- Herunterladen (91) eines Dokuments vor dem Schritt des Sendens der Ereignisse von dem Server an zumindest eine Maschinensteuerung aus der Maschinensteuerung des zweiten Endgeräts und der Maschinensteuerung eines Videoservers, und
- Herunterladen (92) eines Dokuments durch Streaming.

8. Verfahren nach einem der vorangehenden Ansprüche, wobei der Übersetzungsschritt (80) für ein gegebenes Endgerät zumindest einen der nachstehenden Schritte umfasst:
- Umwandeln (81) der Koordinaten eines Zeigers in auf die Abmessung des Bildschirms bezogene Koordinaten, der dem Endgerät zugeordnet ist; und
- Erstellen (82) einer bijektiven Korrespondenz zwischen den Aktionen eines Benutzers auf einem berührungsempfindlichen Bildschirm und ähnlichen Aktionen auf einem nicht berührungsempfindlichen Bildschirm.

9. Computerprogramm, umfassend Programmcodeanweisungen zum Ausführen der Schritte des Verfahrens nach einem der vorangehenden Ansprüche bei Ausführen des Programms auf einem Computer.

## Claims

1. A method for a remote presentation between a first terminal (100) and at least one second terminal (200, 200') connected via a network, including the steps of:
- generating (20) events during an action of a user on one of the peripherals of the first terminal, and sending said generated events to a machine controller (110) of the first terminal;
**characterised in that** it also includes the steps of:
- sending (30) said generated events to a web server (300); and
- sending (40) said events from said web server (300) to at least one machine controller among the machine controller (210) of said second terminal (200) and the machine controller (410) of a video server (400), the configuration of which is compatible with that of the first terminal (100), **characterized in that** it further comprises the following steps:
- sending (31) to said web server the identity of the application launched by the action of a user on the first terminal or one of its peripherals;
- sending (32) the identity of said application from said web server to at least one machine controller of said second terminal; and
- forcing (33) the execution of said application on said second terminal.

2. Method according to claim 1, further including the steps of:
- comparing (70) the configuration of the first terminal (100) and that of the second terminal (210, 210'); and according to the result of the comparison,
- if the configurations are similar, translating (80) said events before sending them to a machine controller of the second terminal;
- if the configurations are not compatible,
o transmitting (88) an error message or an alert message.

3. Method according to any one of the preceding claims, further including, on the video server (400), the steps of:
- generating and recording (50) a video stream reproducing the actions of a user on one of the peripherals of the first terminal by the events generated (20) and sent (30, 40).

4. Method according to claim 3, further including a step of disseminating (60) said video stream to said second terminal (200, 210').

5. Method according to any one of the preceding claims, further including a step of:
- synchronising (10) the first terminal and the second terminal by opening in their respective browsers a same web page (URL) or opening a same application.

6. Method according to claim 5, in which at least one of the first and second terminals comprises a browser configured to read HTML5 data format.

7. Method according to any one of the preceding claims, further including on one at least of said first terminal and second terminal, at least one of the steps of:
- downloading (90) a document in real time,
- downloading (91) a document prior to the step of sending said events from said server to at least one machine controller among the machine controller of said second terminal and the machine controller of a video server, and
- downloading (92) a document by dissemination in continuous mode.

8. Method according to any one of the preceding claims, in which the step of translation (80) comprises for a given terminal at least one of the steps of:
- transforming (81) the coordinates of a pointer into coordinates relating to the dimension of the screen associated with said terminal; and
- establishing (82) a bijective correspondence between the actions of a user on a touch screen and similar actions on a non-touch screen.

9. Computer programme, including programme code instructions for the execution of the steps of the method according to any one of the preceding claims, when said programme is executed on a computer.
